Europäisches Patentamt

European Patent Office

Office européen des brevets

(11) Numéro de publication: **0 234 309**
**A2**

# (12) DEMANDE DE BREVET EUROPEEN

(21) Numéro de dépôt: **87101094.8**

(22) Date de dépôt: **27.01.87**

(51) Int. Cl.4: **G01D 5/26** , **G01K 11/20** ,
**G01N 21/64**

(30) Priorité: **30.01.86 FR 8601304**

(43) Date de publication de la demande:
**02.09.87 Bulletin 87/36**

(84) Etats contractants désignés:
**DE FR GB NL SE**

(71) Demandeur: **COMPAGNIE GENERALE D'ELECTRICITE Société anonyme dite:**
**54, rue La Boétie**
**F-75382 Paris Cedex 08(FR)**

(72) Inventeur: **Fevrier, Hervé**
**11 boulevard du 1er Mai**
**F-91300 Massy(FR)**
Inventeur: **Robieux, Jean**
**5 rue du Professeur Roger Leroux**
**F-92290 Chatenay Malabry(FR)**
Inventeur: **Tardy, André**
**19, rue d'Arpajon**
**F-91520 Egly(FR)**

(74) Mandataire: **Weinmiller, Jürgen et al**
**Lennéstrasse 9 Postfach 24**
**D-8133 Feldafing(DE)**

(54) **Procédé et dispositif pour mesurer à distance la distribution d'un paramètre physicochimique dans un milieu.**

(57) L'invention concerne un procédé et un dispositif pour mesurer à distance la distribution d'un paramètre physico-chimique dans un milieu.

Le procédé consiste à exciter à travers une fibre optique (18) successivement des points de mesure - (20) situés dans un milieu (17), l'excitation de chaque point (20) étant effectuée simultanément par deux impulsions optiques de longueurs d'ondes différentes décalées d'un intervalle de temps, chaque point de mesure renvoyant un rayonnement d'une troisième longueur d'onde, représentatif de la température du point de mesure. Le dispositif comporte deux lasers (3, 4) émettant à des longueurs d'onde différentes, un circuit de retard (5) de l'impulsion optique d'un (4) des deux lasers, les points de mesure comprenant un matériau sensible à une excitation biphotonique.

Application à la mesure des températures.

FIG 1

# Procédé et dispositif pour mesurer à distance la distribution d'un paramètre physico-chimique dans un milieu.

La présente invention concerne un procédé et un dispositif pour mesurer à distance la distribution d'un paramètre physico-chimique dans un milieu. Ce procédé est d'un type comportant

-une excitation optique par impulsions de points de mesure situés dans ledit milieu et soumis audit paramètre physico-chimique, cette excitation étant émise d'un poste éloigné dudit milieu et transmise aux points de mesure par un guide d'onde optique, chaque point de mesure excité renvoyant vers le poste à travers le guide d'onde un rayonnement optique de retour représentatif de la valeur du paramètre physique en ce point de mesure

-et un traitement dans le poste du rayonnement optique de retour.

Les paramètres physiques peuvent être par exemple la température ou la pression ou aussi la composition chimique du milieu.

Un dispositif de ce type est décrit dans l'article "Mesure à distance de la distribution de température à l'aide d'une fibre optique" (HARTOG et al) extrait de "European conference on optical communications" (E.C.O.C), Cannes 1983, Session A VI -Propriétés des fibres (III), pages 215 à 220. Dans ce dispositif, on se propose de mesurer la température de points de mesure distribués le long d'une fibre optique à coeur liquide. Les impulsions d'excitation sont fournies par un laser et le rayonnement optique de retour est constitué par les signaux optiques rétrodiffusés par les points de mesure. Le traitement du rayonnement optique de retour consiste à mesurer le niveau de ces signaux qui est fonction de la température des points de mesure. Le temps mis par ces signaux pour atteindre le poste dépend directement de la vitesse de propagation du rayonnement optique dans la fibre : il est donc représentatif de la position des points de mesure le long de la fibre. On trace alors en fonction du temps la courbe de variation du niveau des signaux optiques rétrodiffusés reçus dans le poste. Compte tenu de la diffusion dans la fibre, on en déduit facilement la température des points de mesure en fonction de leur position le long de la fibre.

Dans ce dispositif, l'émission des signaux optiques rétrodiffusés coincide temporellement avec l'instant d'excitation des points de mesure. Mais il est bien évident qu'il serait impossible d'utiliser le procédé décrit dans cet article dans le cas où la caractéristique à mesurer du rayonnement optique de retour aurait une durée longue par rapport au temps de propagation du rayonnement optique dans la fibre. A titre d'exemple, un dispositif à fibre optique de ce type, dans lequel la caractéristique du rayonnement de retour à mesurer est la durée de vie de la fluorescence d'une terre rare dopant le coeur de la fibre ne peut être pratiquement réalisé : en effet cette durée de vie est de l'ordre de 500 microsecondes, ce qui correspond à un trajet de 100 km le long de la fibre optique. Dans ce cas, les informations spectroscopiques provenant des différents points de mesure seraient superposées temporellement à la réception dans le circuit de traitement, et donc inexploitables, toute localisation des points de mesure étant impossible.

La présente invention a pour but d'utiliser les propriétés spectroscopiques, à variation relativement lente, d'un matériau, afin de réaliser un dispositif de mesure à distance de la distribution d'un paramètre physico-chimique dans un milieu, ce dispositif ayant une bonne résolution spatiale.

La présente invention a pour objet un procédé pour mesurer à distance la distribution d'un paramètre physico-chimique dans un milieu, du type mentionné plus haut, caractérisé en ce que ladite excitation optique comporte, pour les différents points de mesure, respectivement des excitations particulières réalisées l'une après l'autre, l'excitation d'un point de mesure s'effectuant en émettant successivement à partir du poste une première impulsion ayant une première longueur d'onde optique et une deuxième impulsion ayant une deuxième longueur d'onde optique différente de la première longueur d'onde, l'intervalle de temps compris entre ces deux impulsions étant choisi pour que la deuxième impulsion rencontre la première impulsion le long du guide d'onde en ce point de mesure, l'excitation optique de ce point de mesure étant créée par l'illumination simultanée de ce point par les première et deuxième impulsions à l'instant où ces deux impulsions se rencontrent, le rayonnement optique de retour délivré par le point de mesure vers le poste, en réponse à cette excitation optique, ayant au moins une troisième longueur d'onde optique, différente des première et deuxième longueurs d'onde.

La présente invention a aussi pour objet un dispositif pour mesurer à distance la distribution d'un paramètre physico-chimique dans un milieu, celui-ci étant soumis au paramètre physico-chimique et comprenant des points de mesure, le dispositif comportant

-un poste éloigné dudit milieu, ce poste comprenant des moyens d'émission d'impulsions optiques,

-un guide d'onde optique disposé pour relier le poste aux points de mesure, une extrémité de ce guide d'onde située dans le poste étant reliée à la sortie des moyens d'émission pour transmettre les impulsions optiques à travers le guide d'onde aux points de mesure afin d'exciter ces points de mesure, chaque point délivrant en réponse un rayonnement optique de retour se propageant en sens inverse à travers le guide d'onde vers le poste,

-un récepteur photoélectrique disposé dans le poste et relié optiquement à ladite extrémité du guide d'onde pour recevoir le rayonnement optique de retour

-et un circuit de traitement relié à la sortie électrique du récepteur pour analyser le rayonnement optique de retour,

caractérisé en ce que

-lesdits moyens d'émission d'impulsions optiques comportent

. un premier générateur optique capable d'émettre une première impulsion optique ayant une première longueur d'onde optique,

. un deuxième générateur optique capable d'émettre une deuxième impulsion optique ayant une deuxième longueur d'onde optique, les sorties des premier et deuxième générateurs optiques étant reliées à ladite extrémité du guide d'onde,

. un circuit de commande capable d'émettre une impulsion électrique de départ pour l'exploration de chaque point de mesure, la sortie de ce circuit étant reliée à l'entrée du premier générateur optique et au circuit de traitement

. et un circuit de retard dont l'entrée est reliée à la sortie du circuit de commande et dont la sortie est reliée à l'entrée du deuxième générateur optique, ce circuit étant capable de retarder l'impulsion électrique de départ d'un intervalle de temps prédéterminé pour que la deuxième impulsion rencontre la première impulsion le long du guide d'onde au point de mesure à explorer,

-les points de mesure comportent un matériau apte à délivrer, au moment de la rencontre des première et deuxième impulsions, un rayonnement optique de retour ayant une troisième longueur d'onde différente des première et deuxième longueurs d'onde

-et il comporte en outre un filtre optique disposé dans le poste entre ladite extrémité du guide d'onde et le récepteur photoélectrique, ce filtre laissant passer le rayonnement optique de retour et bloquant les rayonnements ayant les première et deuxième longueurs d'onde.

Dans un premier mode de réalisation du dispositif selon l'invention, le guide d'onde comporte une fibre optique située dans ledit milieu, le matériau des points de mesure étant constitué par le coeur de la fibre optique.

Dans une première version de ce premier mode de réalisation, le guide d'onde comporte des moyens pour relier au poste une extrémité de la fibre optique, l'autre extrémité de la fibre étant libre, la rencontre des première et deuxième impulsions s'effectuant après réflexion de la première impulsion sur l'extrémité libre de la fibre optique.

Dans une deuxième version du premier mode de réalisation, le guide d'onde comporte des moyens pour relier au poste les deux extrémités de la fibre optique, la sortie du premier générateur optique est couplée à une première extrémité de la fibre optique, la sortie du deuxième générateur optique est couplée à la deuxième extrémité de la fibre optique, et le filtre optique est couplé à la deuxième extrémité de la fibre optique.

Dans un deuxième mode de réalisation du dispositif selon l'invention, les points de mesure comportent des cellules d'interaction distribuées de façon discontinue dans ledit milieu, ce milieu étant fluide, la paroi de ces cellules étant perméable à ce milieu fluide, le matériau des points de mesure étant contenu dans ces cellules et étant transparent aux rayonnements ayant les première, deuxième et troisième longueurs d'onde.

Dans une première version de ce deuxième mode de réalisation, le guide d'onde comporte des fragments de fibre optique disposés bout à bout en série, les cellules d'interaction étant intercalées entre ces fragments, la rencontre des deuxième et première impulsions s'effectuant après réflexion de cette première impulsion sur l'autre extrémité du guide d'onde.

Dans une deuxième version de ce deuxième mode de réalisation, le guide d'onde comporte une fibre optique principale située dans ledit milieu en dehors des cellules d'interaction, des fibres optiques de dérivation raccordées sur cette fibre optique principale et aboutissent respectivement aux différentes cellules d'interaction, et des fragments terminaux de fibre optique ayant des longueurs différentes entre elles, raccordés respectivement aux différentes cellules d'interaction et se terminant chacun par une face extrême, la première impulsion rencontrant la deuxième impulsion dans une cellule d'interaction après réflexion de la première impulsion sur la face extrême du fragment terminal raccordé à cette cellule.

Des formes particulières d'exécution de l'objet de la présente invention sont décrites ci-dessous, à titre d'exemple, en référence aux dessins annexés dans lesquels

-la figure 1 représente schématiquement une première variante du dispositif selon l'invention, comprenant un premier type de capteur,

-la figure 2 représente schématiquement une deuxième variante du dispositif selon l'invention, comprenant un deuxième type de capteur,

-et les figures 3 et 4 représentent - schématiquement deux autres types de capteurs capables de remplacer celui illustré par la figure 1, pour former respectivement une troisième et une quatrième variantes du dispositif selon l'invention.

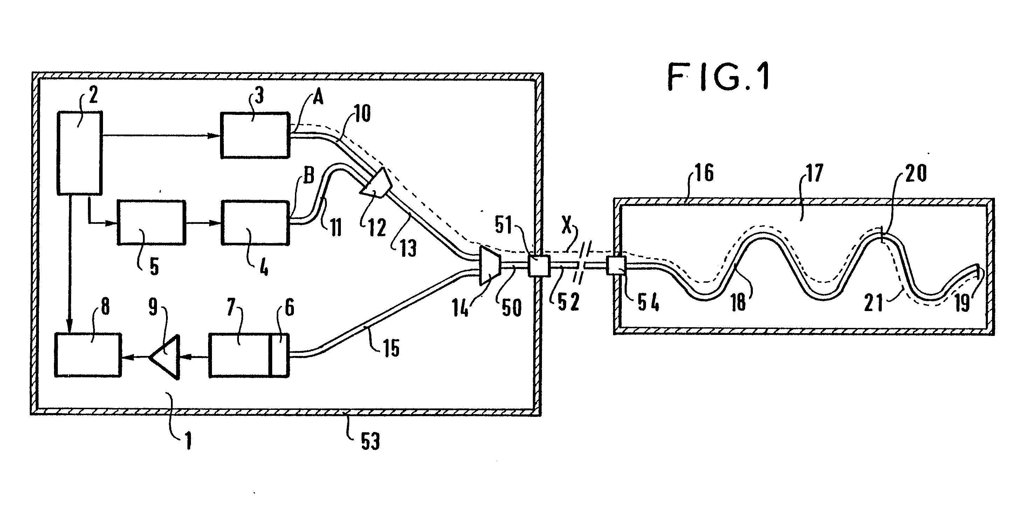

Sur la figure 1, un poste de mesure 1 comporte un circuit électrique de commande 2 dont une sortie est reliée à l'entrée électrique d'un premier générateur optique 3. Une autre sortie du circuit 2 est reliée à l'entrée électrique d'un deuxième générateur optique 4 à travers un circuit de retard 5. De préférence, les générateurs optiques 3 et 4 sont des générateurs laser. Le poste 1 comporte également un filtre optique 6 disposé devant la surface photosensible d'un récepteur photoélectrique 7 dont la sortie électrique est reliée à un circuit de traitement 8 à travers un amplificateur 9. Une autre sortie du circuit de commande 2 est reliée au circuit de traitement 8.

Une extrémité d'une fibre optique 10 est couplée à la sortie du générateur optique 3, tandis qu'une extrémité d'une fibre optique 11 est couplée à la sortie du générateur optique 4. Les extrémités libres des fibres 10 et 11 sont reliées respectivement aux deux branches dérivées d'un coupleur optique 12 en Y reliant ces deux branches dérivées à une branche collectrice. Une fibre optique 13 relie la branche collectrice du coupleur 12 à une branche dérivée d'un autre coupleur optique 14 en Y. Une fibre optique 15 relie l'autre branche dérivée du coupleur 14 à l'entrée du filtre optique 6. La branche collectrice du coupleur 14 est reliée, par un tronçon de fibre optique 50 et un coupleur à deux branches 51, à une extrémité d'une fibre optique 52 assurant la liaison optique entre le poste de mesure 1 et une enceinte 16 contenant un milieu 17 tel que l'air. Le coupleur 51 est inséré dans une cloison 53 du poste de mesure 1, cette cloison 53 entourant les éléments 2 à 14 et 50. L'autre extrémité de la fibre optique 52 est reliée, par un coupleur à deux branches 54, à une extrémité d'une fibre optique 18 disposée dans l'enceinte 16, le coupleur 54 étant inséré dans la cloison de l'enceinte 16.

Le dispositif représenté sur la fibre 1 fonctionne de la manière suivante.

On se propose de mesurer la distribution spatiale de la température dans le milieu 17, le long de la fibre 18.

Le circuit de commande 2 émet une impulsion électrique de départ qui provoque l'émission par le laser 3 d'une première impulsion optique de durée très courte et de longueur d'onde $L_1$. L'impulsion électrique de départ émise par le circuit 2 est retardée par le circuit 5 d'un intervalle de temps t, de sorte que le laser 4 émet une deuxième impulsion optique très brève, de longueur d'onde $L_2$ et retardée de l'intervalle de temps t par rapport à la première impulsion. La première impulsion se propage successivement dans les fibres 10, 13, 50, 52 et 18 ; elle est renvoyée en sens inverse par réflexion sur la face de sortie 19 de la fibre 18. Cette face 19 peut être munie si nécessaire d'un revêtement réfléchissant. La deuxième impulsion se propage successivement dans les fibres 11, 13, 50, 52 et 18 et rencontre la première impulsion renvoyée par la face 19 en un point 20 de la fibre 18. Le point 20 est situé à une distance 21 de la face 19, cette distance étant comptée le long de la fibre 18. La distance 21 dépend de la vitesse de propagation des impulsions dans la fibre 18 et sa valeur est directement fonction de l'intervalle de temps t entre les première et deuxième impulsions.

Le coeur de la fibre optique 18 est formé par un verre dopé par une terre rare. Lorsque ce verre est illuminé simultanément par le rayonnement de longueur d'onde $L_1$ de la première impulsion et par le rayonnement de longueur d'onde $L_2$ de la deuxième impulsion, ses atomes subissent une absorption biphotonique qui élève leur niveau quantique d'un niveau initial non excité (par exemple le niveau fondamental) à un niveau excité. A partir de ce niveau excité, il se produit spontanément un phénomène de désexcitation donnant lieu à la production d'une luminescence de longueur d'onde $L_3$. Cette luminescence est émise par le point 20 qui est le seul point du coeur de la fibre illuminé simultanément par les deux impulsions optiques de longueurs d'onde $L_1$ et $L_2$. La durée de vie de cette luminescence est représentative de la température du point 20 de la fibre 18, c'est-à-dire de la température du milieu entourant immédiatement ce point 20. La luminescence se propage dans les fibres 18 52, 50 et 15, et traverse sans absorption le filtre 6 qui ne laisse passer que le rayonnement de longueur d'onde $L_3$. Le photodétecteur 7 transforme la luminescence en une impulsion électrique amplifiée par l'amplificateur 9. La durée de vie du signal de luminescence est ainsi mesurée par le circuit 8. Cette durée est représentative de la température du milieu au point 20. La position de ce point 20 sur la fibre peut être aisément déterminée à partir du retard t entre les première et deuxième impulsions optiques.

En effet, la distance comptée le long des fibres optiques entre les points d'émission (A ou B) des deux impulsions optiques et le point 20 de la fibre 18 est

$$x = L - \frac{Vt}{2},$$

L étant la distance comptée le long des fibres optiques entre les points A ou B et le point extrême 19 de la fibre 18, V étant la vitesse de propagation des rayonnements optiques de longueurs d'ondes $L_1$ et $L_2$ dans les fibres optiques, en négligeant la durée des impulsions optiques d'excitation.

Les opérations décrites ci-dessus permettent donc de mesurer la température du milieu 17 en un point 20 déterminé par sa position le long de la fibre 18. Pour mesurer la température en un autre point de la fibre, il suffit de répéter ces opérations en modifiant la valeur de l'intervalle de temps t entre les deux impulsions émises respectivement par les générateurs 3 et 4. On voit donc qu'il est possible de mesurer ainsi la distribution continue des températures du milieu le long de la fibre 18 qui joue le rôle d'un capteur de mesure de température.

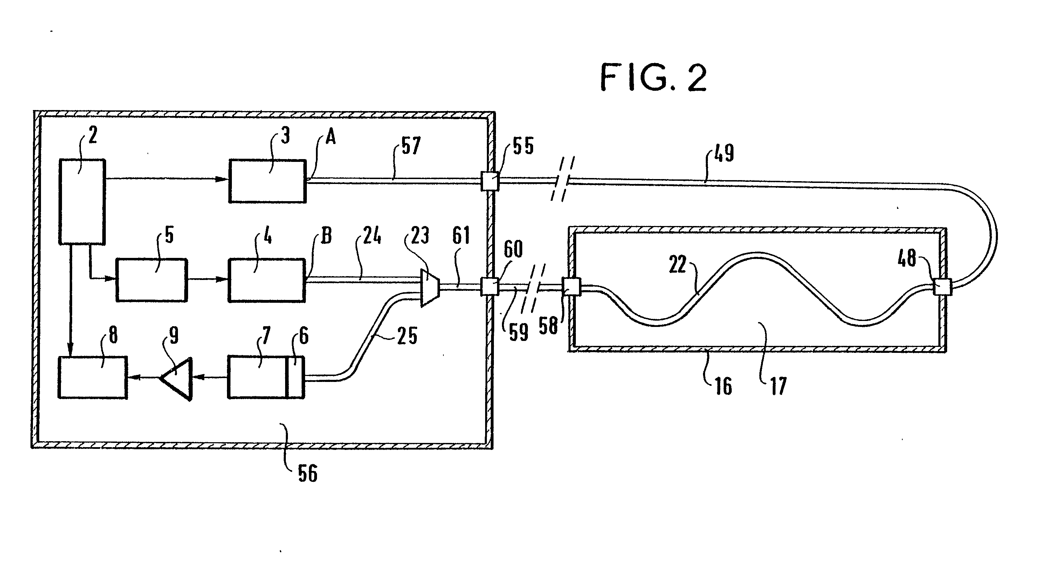

La figure 2 montre une deuxième variante du dispositif selon l'invention, qui comporte des éléments identiques à ceux du dispositif illustré par la figure 1, ces éléments identiques étant désignés par les mêmes références. Le dispositif de la figure 2 se distingue de celui de la figure 1 par le fait que les deux extrémités de la fibre optique de mesure 22 sont respectivement reliées optiquement au générateur 3 et au générateur 4. La liaison avec le générateur 3 s'effectue à travers un coupleur optique 48 à deux branches, inséré dans la paroi de l'enceinte 16, et une fibre optique 49, un coupleur optique 55 à deux branches, inséré dans la paroi du poste de mesure 56, et une fibre optique 57. La liaison avec le générateur 4 s'effectue à travers un coupleur 58 à deux branches, inséré dans dans la paroi de l'enceinte 16, une fibre optique 59, un coupleur 60 à deux branches inséré dans la paroi du poste 56, une fibre optique 61, un coupleur 23 en Y et une fibre optique 24 connectée à une branche de dérivation du coupleur 23. Une autre fibre optique 25 relie l'autre branche de dérivation du coupleur 23 à l'entrée du filtre 6.

Le fonctionnement du dispositif illustré par la figure 2 diffère de celui du dispositif illustré par la figure 1, par le fait que la première impulsion optique émise par le générateur 3 rencontre directement la deuxième impulsion optique émise par le générateur 4, ces deux impulsions se propageant en sens inverse dans la fibre 22 : la première impulsion ne subit aucune réflexion avant sa rencontre avec la deuxième impulsion. Bien entendu, le temps de retard t est choisi pour que le point de rencontre des deux impulsions soit situé sur la fibre optique de mesure 22. Dans le cas où le paramètre à mesurer est la température, la fibre optique 22 peut être d'un type analogue à celui de la fibre 18 de la figure 1.

A titre indicatif, pour une mesure de température, les générateurs 3 et 4 des dispositifs illustrés par les figures 1 et 2 peuvent être des émetteurs laser dont les largeurs d'onde d'émission respective $L_1$ et $L_2$ peuvent être choisies entre 1 et 1,4 micromètres. Le matériau du coeur des fibres 18 et 22 jouant le rôle de capteur peut être de verre dopé au néodyme. Dans ces conditions, la longueur d'onde $L_3$ de la luminescence est de l'ordre de 1,06 micromètre. On constate qu'une augmentation de la température à mesurer correspond à une diminution de la durée de vie de la luminscence.

Les dispositifs illustrés par les figures 1 et 2 permettent aussi d'effectuer des mesures de pression du milieu contenu dans l'enceinte. En effet la pression qui s'excerce en un point de mesure sur la gaine de la fibre 18 ou 22 est transmise par élasticité de la gaine au coeur de la fibre. Dans les conditions énoncées au paragraphe précédent, on constate qu'une augmentation de pression correspond à une augmentation de la durée de vie de la luminescence.

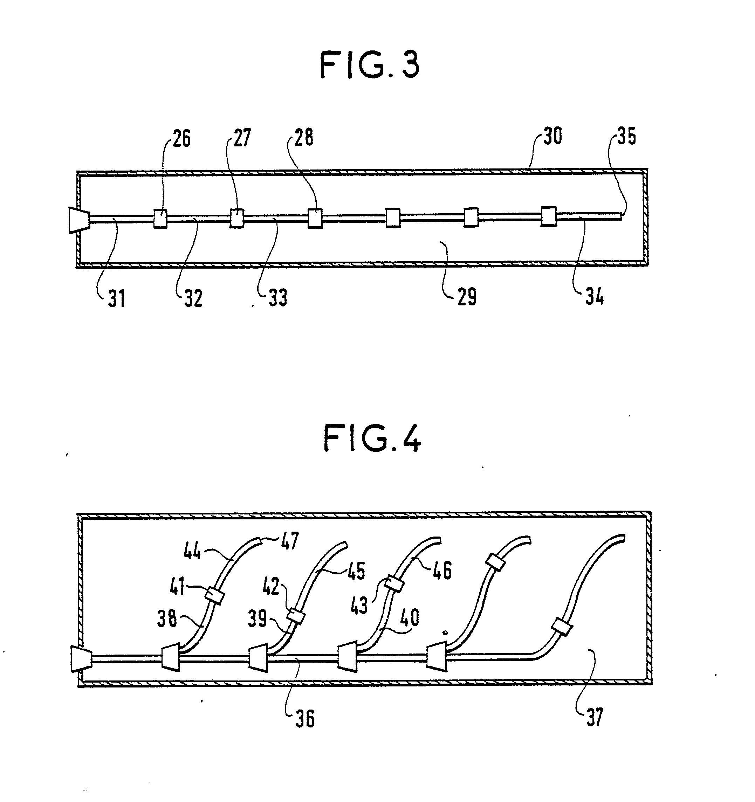

La figure 3 représente un capteur de mesure, qui peut être utilisé à la place de la fibre optique 18 dans le dispositif illustré par la figure 1. Ce capteur comporte des cellules d'interaction telles que 26, 27, et 28 distribuées de façon discontinue dans une enceinte 30 contenant un milieu 29 tel qu'un gaz dont on désire par exemple mesurer la composition chimique. Ces cellules sont intercalées entre des fragments de fibre optique tels que 31, 32, 33 disposés bout à bout en série. Chaque cellule est délimitée par une paroi perméable au milieu 29 et contient un matériau capable de réagir chimiquement avec les constituants de ce milieu fluide, ce matériau étant transparent aux rayonnements optiques d'émission de longueurs d'onde $L_1$, $L_2$, et au rayonnement optique de retour.

Les cellules d'interaction constituent des points mesure du dispositif, et les fragments de fibre optique ne contiennent pas de matériau réactif et servent uniquement à transmettre les rayonnements optiques.

Lorsque le matériau contenu dans des cellules subit une excitation simultanée biphotonique de longueurs d'onde $L_1$, $L_2$, il émet un rayonnement optique de retour dont les caractéristiques sont représentatives de la composition chimique du milieu fluide 29. Dans ce cas, le rayonnement de retour peut par exemple comporter plusieurs longueurs d'onde spécifiques chacune d'un élément chimique du milieu fluide à analyser. Le circuit de traitement 8 (figure 1) peut alors comporter des moyens pour mesurer ces longueurs d'onde de retour. Comme dans le cas de la figure 1, le rayonnement d'excitation de longueur d'onde L1 est réfléchi sur la face extrême 35 du fragment terminal 34 avant de rencontrer dans une cellule d'interaction le rayonnement d'excitation de longueur d'onde $L_2$.

La figure 4 représente un autre type de capteur de mesure, qui peut aussi remplacer la fibre optique 18 dans le dispositif illustré par la figure 1. Ce capteur comporte une fibre optique principale 36 disposée dans un milieu fluide 37, des fibres optiques de dérivation telles que 38, 39 et 40 raccordées sur la fibre 36 et aboutissant respectivement à des cellules d'interaction 41, 42 et 43, et des fibres optiques terminales 44, 45 et 46 raccordées respectivement aux cellules d'interactions. Le fonctionnement du dispositif utilisant ce type de capteur est analogue à celui du dispositif comportant le capteur illustré par la figure 3. Chaque deuxième impulsion rencontre la première impulsion correspondante dans une cellule d'interaction 41 après réflexion de la première impulsion sur la face extrême 47 de la fibre terminal 44 raccordée à cette cellule.

Bien entendu, les fibres optiques terminales 44, 45, 46 doivent avoir des longueurs différentes entre elles, puisque ces longueurs correspondent à des retards différents entre les deux impulsions d'excitation.

Il est clair que les différentes variantes du dispositif selon l'invention décrites ci-dessus permettent de concentrer l'excitation optique du matériau actif en un point de mesure unique. Les signaux de retour émanant des différents points de mesure ne peuvent être superposés à la réception, puisque les mesures relatives aux différents points de mesure sont effectuées séparément l'une après l'autre.

**Revendications**

1/ Procédé pour mesurer à distance la distribution d'un paramètre physico-chimique dans un milieu, comportant
-une excitation optique par impulsions de points de mesure situés dans ledit milieu et soumis au paramètre physico-chimique, cette excitation étant émise d'un poste éloigné dudit milieu et transmise aux points de mesure par un guide d'onde optique, chaque point de mesure excité renvoyant vers le poste à travers le guide d'onde un rayonnement optique de retour représentatif de la valeur du paramètre physique en ce point de mesure
-et un traitement dans le poste du rayonnement optique de retour, caractérisé en ce que ladite excitation optique comporte, pour les différents points de mesure, respectivement des excitations particulières réalisées l'une après l'autre, l'excitation d'un point de mesure (20) s'effectuant en émettant successivement à partir du poste (1) une première impulsion ayant une première longueur d'onde optique (L₁) et une deuxième impulsion ayant une deuxième longueur d'onde optique (L₂), différente de la première longueur d'onde, l'intervalle de temps (t) compris entre ces deux impulsions étant choisi pour que la deuxième impulsion rencontre la première impulsion le long du guide d'onde en ce point de mesure, l'excitation optique de ce point de mesure (20) étant créée par l'illumination simultanée de ce point par les première et deuxième impulsions à l'instant où ces deux impulsions se rencontrent, le rayonnement optique de retour délivré par le point de mesure (20) vers le poste (1), en réponse à cette excitation optique, ayant au moins une troisième longueur d'onde optique (L₃) différente des première et deuxième longueurs d'onde (L₁,L₂).

2/ Dispositif pour mesurer à distance la distribution d'un paramètre physico-chimique dans un milieu, celui-ci étant soumis au paramètre physico-chimique et comprenant des points de mesure, le dispositif comportant
-un poste éloigné dudit milieu, ce poste comprenant des moyens d'émission d'impulsions optiques,
-un guide d'onde optique disposé pour relier le poste aux points de mesure, une extrémité de ce guide d'onde située dans le poste étant reliée à la sortie des moyens d'émission pour transmettre les impulsions optiques à travers le guide d'onde aux points de mesure afin d'exciter ces points de mesure, chaque point délivrant en réponse un rayonnement optique de retour se propageant en sens inverse à travers le guide d'onde vers le poste,
-un récepteur photoélectrique disposé dans le poste et relié optiquement à ladite extrémité du guide d'onde pour recevoir le rayonnement optique de retour
-et un circuit de traitement relié à la sortie électrique du récepteur pour analyser le rayonnement optique de retour,
caractérisé en ce que
-lesdits moyens d'émission d'impulsions optiques comportent
. un premier générateur optique (3) capable d'émettre une première impulsion optique ayant une première longueur d'onde optique (L₁),
. un deuxième générateur optique capable d'émettre une deuxième impulsion optique ayant une deuxième longueur d'onde optique (L₂), les sorties des premier et deuxième générateurs optiques étant reliées à ladite extrémité du guide d'onde,
. un circuit de commande (2) capable d'émettre une impulsion électrique de départ pour l'exploration de chaque point de mesure, la sortie de ce circuit étant reliée à l'entrée du premier générateur optique (3) et au circuit de traitement (8)
. et un circuit de retard (5) dont l'entrée est reliée à la sortie du circuit de commande (2) et dont la sortie est reliée à l'entrée du deuxième générateur optique (4), ce circuit (5) étant capable de retarder l'impulsion électrique de départ d'un intervalle de temps prédéterminé (t) pour que la deuxième impulsion rencontre la première impulsion le long du guide d'onde au point de mesure (20) à explorer,
-les points de mesure (20) comportent un matériau apte à délivrer, au moment de la rencontre des première et deuxième impulsions, un rayonnement optique de retour ayant une troisième longueur d'onde ($L_3$) différente des première et deuxième longueurs d'onde ($L_1$, $L_2$)

-et il comporte en outre un filtre optique (6) disposé dans le poste entre ladite extrémité du guide d'onde et le récepteur photoélectrique (7), ce filtre ne laissant passer que le rayonnement optique de retour ayant la troisième longueur d'onde ($L_3$).

3/ Dispositif selon la revendication 2, caractérisé en ce que le guide d'onde comporte une fibre optique (18) située dans ledit milieu (17), le matériau des points de mesure (20) étant constitué par le coeur de la fibre optique.

4/ Dispositif selon la revendication 3, caractérisé en ce que le guide d'onde comporte des moyens pour relier au poste (1) une extrémité de la fibre optique (18), l'autre extrémité (19) de la fibre étant libre, la rencontre des première et deuxième impulsions s'effectuant après réflexion de la première impulsion sur l'extrémité libre (19) de la fibre optique (18).

5/ Dispositif selon la revendication 3, caractérisé en ce que le guide d'onde comporte des moyens pour relier au poste (56) les deux extrémités de la fibre optique (22), la sortie (A) du premier générateur optique (3) est couplée à une première extrémité de la fibre optique (22), la sortie (B) du deuxième générateur optique (4) est couplée à la deuxième extrémité de la fibre optique (22), et le filtre optique (6) est couplé à la deuxième extrémité de la fibre optique (22).

6/ Dispositif selon la revendication 2, caractérisé en ce les points de mesure comportent des cellules d'interaction (26, 27, 28) distribuées de façon discontinue dans ledit milieu (29), ce milieu étant fluide, la paroi de ces cellules étant perméable à ce milieu fluide, le matériau des points de mesure étant contenu dans ces cellules et étant transparent aux rayonnements ayant les première, deuxième et troisième longueurs d'onde ($L_1$, $L_2$, $L_3$).

7/ Dispositif selon la revendication 6, caractérisé en ce que le guide d'onde comporte des fragments (31, 32, 33) de fibre optique disposés bout à bout en série, les cellules d'interaction (26, 27, 28) étant intercalées entre ces fragments, la rencontre des deuxième et première impulsions s'effectuant après réflexion de cette première impulsion sur l'autre extrémité (35) du guide d'onde.

8/ Dispositif selon la revendication 6, caractérisé en ce que le guide d'onde comporte une fibre optique principale (36) située dans ledit milieu en dehors des cellules d'interaction, des fibres optiques de dérivation (38, 39, 40) raccordées sur cette fibre optique principale (36) et aboutissent respectivement aux différentes cellules d'interaction (41, 42, 43), et des fragments terminaux de fibre optique (44, 45, 46) ayant des longueurs différentes entre elles, raccordés respectivement aux différentes cellules d'interaction et se terminant chacun par une face extrême, la première impulsion rencontrant la deuxième impulsion dans une cellule d'interaction (41) après réflexion de la première impulsion sur la face extrême (47) du fragment terminal (44) raccordé à cette cellule (41).

FIG.1

# FIG. 2

0 234 309

# FIG.3

# FIG.4